# EUROPEAN PATENT SPECIFICATION

(11) **EP 0 410 673 B1**
(45) Date of publication and mention of the grant of the patent: **15.12.1993**
(21) Application number: 90308052.1
(22) Date of filing: 23.07.1990
(51) Int. Cl.: B60C 9/26

(54) **A Radial tyre for heavy duty vehicles**
Radialer Luftreifen für Lkw
Bandage radial pour véhicules lourds

(30) Priority: 24.07.1989 JP 192084/89
(43) Date of publication of application: 30.01.1991
(73) Proprietor: SUMITOMO RUBBER INDUSTRIES LIMITED, Kobe-shi Hyogo-ken (JP)
(72) Inventor: Nishi, Minoru, Kobe-Shi, Hyogo-ken (JP); Asakawa, Naoki, Shirakawa-shi, Fukushima-ken (JP); Takada, Yoshiyuki, Shirakawa-shi, Fukushima-ken (JP)
(74) Representative: Stewart, Charles Geoffrey

(56) References cited:
- FR-A- 2 212 244
- FR-A- 2 302 873
- FR-A- 2 493 236
- FR-A- 2 578 789
- US-A- 4 273 177

## Description

The present invention relates to a radial tyre for heavy duty vehicles.

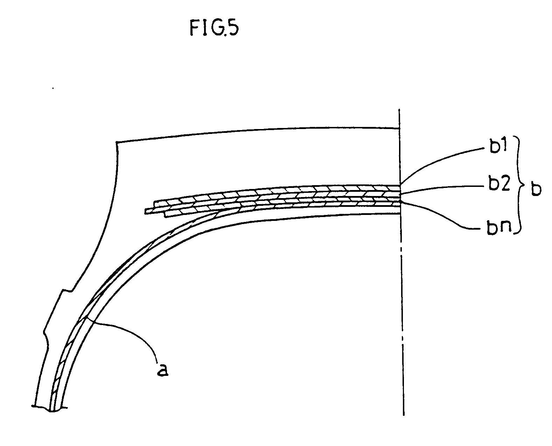

In a radial tyre for a heavy duty vehicle such as trucks, busses and the like, heretofore, a belt layer (b) composed of at least three belt plies (b1,b2,bn) of steel cords each having the same modulus of elasticity is arranged on a carcass (a), as shown in Figure 5.

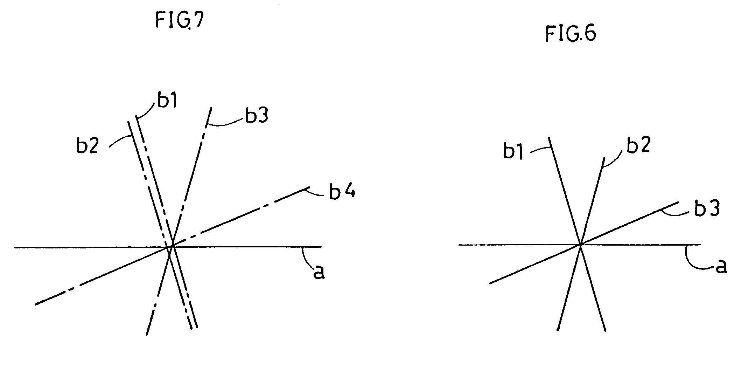

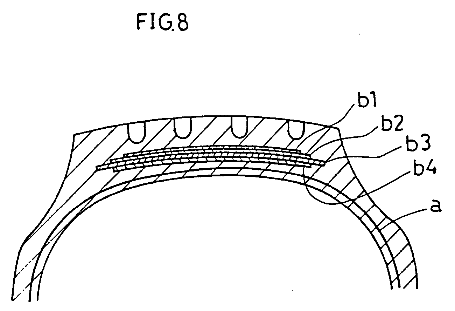

Further, the belt layer (b) which is shown in Figures 6 and 7 has the cords of each of the two outer belt plies (b1 and b2) laid such that each cord angle to the equator is smaller than that of the innermost belt ply (bn) which is adjacent to the carcass (a). Also the cords of the belt plies (b1 and b2), in the case of n=3, are crossed with each other, and in the case of n=4, are arranged in the same direction. Thus a triangular structure is constituted as a whole so as to reinforce the tread evenly and with high rigidity.

It is well known that such a tyre is prone to so-called ply separation in which the radially outermost belt ply (b1) separates at its edges during high speed running so as to reduce high speed durability.

This is particularly so when such a tyre is used under high load conditions when the tread internal temperature is higher than a conventional tyre. Also the belt layer (b1) is formed with cut edge plies so the reinforcement effect on the tyre case in the ply edge regions is lower than centrally and as a result, due to the increase in ground contact pressure accompanied by growth of the outer diameter in the tread shoulder, the tread internal temperature in these regions is still further increased. In addition, the outermost belt ply (b1) directly receives the stress change from the ground contact area and so the outer ply is subjected to the most severe shearing strain. These effects together cause separation between the belt plies (b1 and b2) to be accelerated.

Further, when there are three belt plies with the cords of belt plies (b1 and b2) respectively crossed, when the tyre deforms, each cord extends in a different direction with respect to ply to ply and accordingly shearing stress acts between the belt plies (b1 and b2) and thereby ply edge separation of the belt ply (b1) is produced assisted by the said increase of temperature in the shoulder regions.

In order to prevent such ply separation, proposals such as a rubber compound with a low heat generation and small loss factor have been made for the tread rubber. Other ideas are to reduce the tread rubber thickness gauge, in particular in the shoulder. However, such means not only bring about too small an effect but they also induce many other problems in tyre performance. For example, to adopt a rubber having a low heat generation reduces the road grip performance, and to reduce the tread rubber gauge deteriorates the wear life and causes uneven wear.

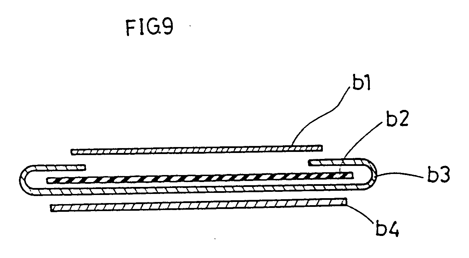

Further, to prevent belt ply separation in a belt layer (b) comprise four steel belt plies (b1,b2,b3 and b4), it has been suggested in Japanese Patent Application laid open No 59-67108 and as shown in Figures 8 and 9, in order to prevent the occurrence of shearing strain caused by the difference of belt cord angle between the second and third belt plies (b2 and b3) counted from the tread, to replace the steel belt (b3) wiht a belt ply composed of organic fibre cords to reduce ply separation between belt plies (b2 and b3). In addition, both edges of the belt ply (b2) may be covered by organic fibre cords of the belt ply (b3) (as shown in Fig. 9) so that the shearing strain at the edge of the belt ply (b2) is reduced to prevent ply separation.

However, as regards an all-steel tyre comprising a carcass and a belt layer each composed of steel cords as is now more often used for truck and bus tyres, ply separation of the belt layer (b) is liable to occur between belt plies (b1 and b2) because the belt ply (b1) nearest to the ground contacting tread surface is subjected to the most severe deformation from the ground. Accordingly, the prior art according to the patent publication can not prevent such ply separation.

On the other hand, Japanese Patent Application laid open No 53-18105 teaches ply edges of the outermost belt ply covered by folding ply edge parts of a belt ply laid under the outermost belt ply and adjacent thereto, but this publication is particularly for a tyre for a large vehicle used off-road, where such belt constructions are always easy to deform for use on very rough conditions.

Accordingly, the prior art does not give prevention of ply separation of the outermost steel belt layer and thus to improve high speed durability while maintaining tyre performance of an all steel radial tyre for truck and bus use.

It is hence a primary object of the invention to provide a tyre for heavy duty vehicles which resists ply separation and which also has improved high speed durability without loss of other tyre performance.

According to the present invention, a radial tyre for heavy duty vehicles comprises a carcass with a semi-radial or radial structure extending from a tread through side walls and wrapped around a bead core in each of two beads, a steel belt layer with a triangulated structure composed of at least three belt plies each containing steel belt cords and laid radially outside said carcass, characterised by a middle layer containing cords of aromatic polyamide fibres, wherein the first belt ply is positioned radially outermost among the said belt plies and has belt cords inclined at an angle from 10 degrees to 30 degrees to the tyre equator, the second belt ply is positioned radially inside said first belt ply and has belt cords inclined in the opposite direction to the belt cords of said first belt ply at an angle from 10 degrees to 30 degrees to the tyre equator, said middle layer has a main portion provided between said first and second belt plies and skirts or edges folded over onto said first belt ply from both axially outer edges of said main portion so as to wrap each axially outer edge of said first belt ply, and said cords of said middle layer in the main portion slant in the same direction as the belt cords of said first belt ply and are arranged at an angle of inclination of 3 degrees or less to the belt cords of said first belt ply.

In this tyre, the middle layer laid between the first and the second belt plies is composed of aromatic polyamide fibre cords having a relatively higher elongation than that of the steel belt cords, thereby the shearing force acting between the first and the second belt plies during tyre deformation is mitigated. Further, by covering the lateral cut edges of the first belt ply with skirts or folded-over portions also increases the adhesion to the rubber and in addition, due to the increased hoop effect produced by the skirts in the laterally outer edges of the belt to restrain the growth of the outer diameter during high speed running, as the result, the high speed durability of the tyre is improved.

Embodiments of the present invention will now be described by way of example only, referring to the attached drawings in which:
Figure 1 is a sectional view of one half of a tyre of the present invention;
Figure 2 is an enlarged section view showing the belt layer;
Figure 3 is a plan view of the belt layer only;
Figure 4 is a sectional view showing other embodiment;
Figure 5 is a sectional view showing a conventional tyre;
Figures 6 and 7 are views showing the cord angles;
Figure 8 is a sectional view showing another conventional tyre;
Figure 9 is a sectional view showing a belt structure according to the prior art.

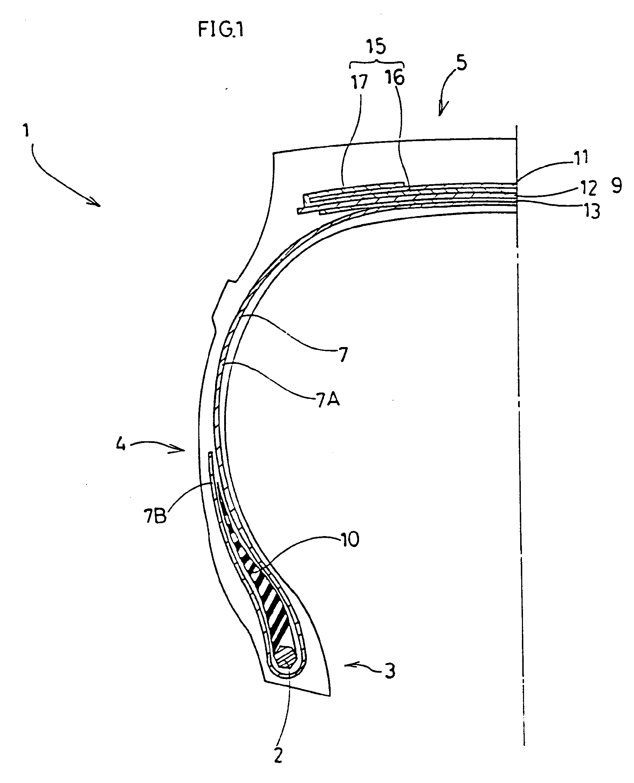

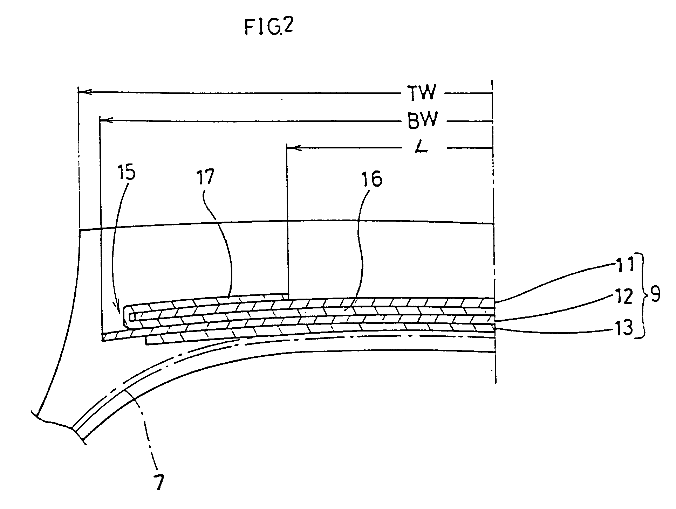

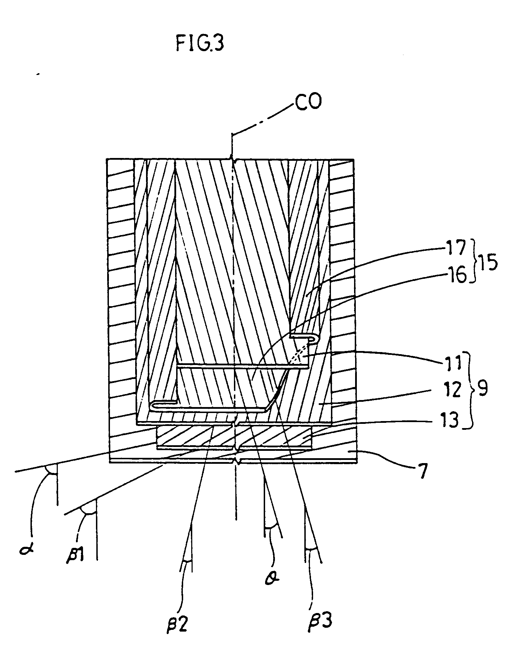

In Figures 1 to 3, a tyre 1 for a heavy duty vehicle comprises two bead regions 3 each reinforced by an annular bead core 2, sidewalls 4 extending from said bead regions 3 radially outwardly of the tyre, and a tread 5 connecting between the outer edges of the sidewalls 4. Between the bead regions 3 there extends a reinforcing carcass 7 of which the main portion 7A extends through a tread 5 and sidewalls 4 to the bead regions 3. Turned up portions 7B are wrapped around the bead cores 2 from the inside to the outside. A steel belt layer 9 is arranged radially outwardly of the carcass 7 and inwardly of the tread 5.

The carcass 7 has a semi-radial or a radial structure composed of at least one carcass ply of carcass cords laid at an angle ranging from 75 degrees to 90 degrees with respect to the equator of the tyre. Organic or inorganic fibre cord may be employed as the carcass cords. In this embodiment, steel cord is adopted.

A tapered triangular bead apex 10 made of hard rubber and extending outwardly in the radial direction from each bead core 2 is provided between the carcass main portion 7A and its turned up portion 7B to reinforce the sidewall 5 so that the lateral rigidity of the tyre is increased.

The steel belt layer 9 is composed of three layers, a first belt ply 11, a second belt ply 12 and a third belt ply 13 which are respectively positioned from the tread surface towards carcass in that order. The second belt ply 12 is wider than the first belt ply 11 and the third belt ply 13 is narrower than the first belt ply 11. Furthermore the maximum width BW of the steel belt layer 9, that is the width of the second belt ply 12, is made to be more than 0.83 and less than 0.99 times the tread width TW so the steel belt layer 9 covers substantially the full width of the tread to increase the hoop effect.

The first, second and third belt plies 11,12 and 13 are respectively made of steel cords having an initial modulus of elasticity of at least 15 x 10⁵kg/cm². The third belt ply 13 contains belt cords laid at an angle β1 ranging from 50 degrees to 70 degrees with respect to the equator CO of the tyre inclined, for example, in the right upwards direction as the carcass cords. The second belt ply 12 contains belt cords laid at an angle β2 ranging from 10 degrees to 30 degrees with respect to the equator CO of the tyre in the right upwards direction, and the first belt ply contains belt cords laid at an angle β3 ranging from 10 degrees to 30 degrees with respect to the equator of the tyre in the left upwards direction.

Accordingly, the belt layer 9 forms a triangular structure having a high hoop effect substantially all over the whole width of the tread 5 by crossing each belt cord of each belt plies 11,12 and 13. On the other hand the belt cords of the second and third belt plies 12 and 13 are laid at the same direction so that the shearing strain between the second and third belt plies 12 and 13, which is generated by the deformation of the tyre during running, is mitigated. In addition, the cord angle β3 of the third belt ply 13 is arranged at the middle between the cord angle α of the carcass 7 and the cord angle β2 of the second belt ply 12, thereby reducing potential separation between the carcass 7 and the belt layer 9.

According to the present invention, a middle layer 15 is provided between the first and the second belt plies 11 and 12 to prevent separation of the first belt ply 11, which is the radially outermost belt ply. The middle layer 15 is a folded edge ply formed in such a way that the main portion 16 of the middle layer 15 is laid between the first and the second belt plies 11 and 12 and both lateral edges are folded up onto the first belt ply 11 towards the equator CO to form two skirts or folded regions 17 wrapping the lateral outer edges of the said first belt ply 11 between the main portion and the lateral skirts 17.

The middle layer 15 is composed of organic fibre cords having lower elasticity than steel cord and relatively high extensibility and high heat resistance, that is, aromatic polyamide fibre cords whose initial modulus of elasticity is 13 x 10⁵kgf/cm² or less. The cords of the middle layer 15 are embedded in base or topping rubber at a slant angle ϑ of 3 degrees or less with respect to the belt cords in the first belt ply 11.

Accordingly, the middle layer 15 mitigates the shearing strain acting between the first and the second belt plies 11 and 12 due to its relatively high extensibility. On the other hand, the cords of the middle layer 15 in the main portion 16 and those of the first belt ply 11 are laid substantially in the same direction so as to increase adhesion between the middle layer 15 and the first belt ply 11.

Furthermore, the middle layer 15 covers the laterally outer cut edges of the first belt ply 11 with its skirts 17 to exert a restriction force on the carcass 7 at said outer edges and thus to restrain the heat build up which otherwise would be caused by growth of the outer diameter in the tread shoulder regions and uneven wear.

If such organic fibre cords as nylon, rayon, polyester or the like are used as cords for the middle layer 15, the restriction force on the carcass is insufficient so that growth of the outer diameter is not restrained and resistance to heat becomes poor.

For the cords for the middle layer 15 cords of 1500d/2 with a twist number of 35 x 25/10cm of aromatic polyamide fibre cord are preferably employed.

Further, for the base or topping rubber, a rubber compound having a 100% modulus (100M) in the range of 25 to 50kg/cm², a 300% modulus (300M) in the range of 100 to 200kg/cm², a JISA hardness (HA) in the range of 75 degrees to 80 degrees, a complex modulus (E*) of elasticity in the range of 50 to 200kg/cm² and a loss factor (tan δ) in the range of 0.1 to 0.2 is preferably employed. Such a rubber compound is soft and of low heat generation and small energy loss, thereby said shearing strain is much more reduced so as to prevent separation between the middle layer 15 and the second belt ply 12.

The value of the complex modulus (E*) of elasticity and the loss factor (tan δ) are values measured by using a visco elastic spectrometer made by Iwamoto Seisakusho at a frequency of 20 HZ and a dynamic strain of 2% under a static elongation strain of 10% at 70 degrees. The sample is shaped in the form of a strip having a length of 30mm, a width of 4mm and a thickness of 1.5mm.

The axial distance L between the innermost free edges of the skirt 17 of the middle layer 15 is set to be 0.8 times the tread width TW or less, preferably 0.4 times or less.

Thereby, the innermost free edges of the skirts 17 are terminated at the tread central part in which the deformation of the tyre is relatively small, so that the stress concentration on said free edges is mitigated. By that reason, said distance may set to be 0, that is, both free edges may be brought face-to-face with each other (butted joint) However, an overlapped joint is not preferably because of the thickness variation resulting. Thus excepting said butted joint, the distance L is set to be more than 0.2 times the tread width TW, thereby the cost and the weight may be reduced while maintaining the aforesaid effect.

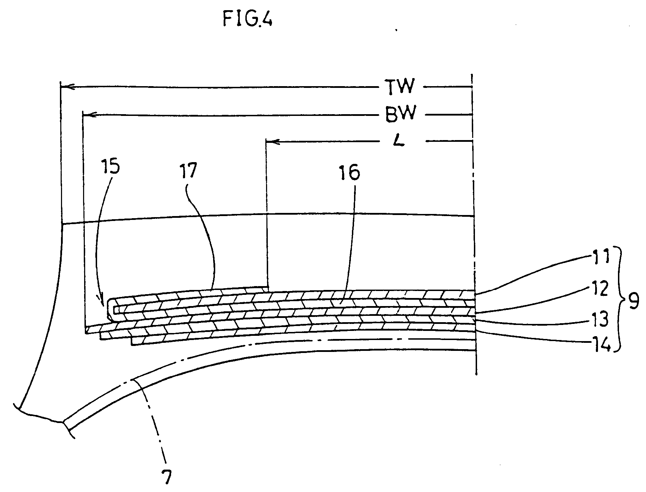

Figure 4 shows another embodiment of the present invention in which the belt layer 9 is composed of four steel belt plies 11,12,13,14. In this embodiment, the cords of the first and the second belt plies 11 and 12 are laid at an angle from 10 to 30 degrees with a left upward inclination. The cords of the third belt ply 13 are laid at an angle from 10 to 30 degrees with a right upward inclination. The cords of the fourth belt ply 14 are laid at angle from 60 to 70 degrees with a right upward inclination.

Various test tyres in size 11R22.5 14PR,HW-J were made with the specification shown in Table 1(A) and 1(B), and a high speed durability was evaluated on a drum tester under a load of 1.4 times the normal specific load, starting from a speed of 100km/h. After 2 hours running the speed was stepped up by 10km/h, then again after each two hours running.

The speed when the tyre was destroyed was taken as the durability index.

The test results are summarised in Table 1(A) and 1(B), the results were expressed as indexes by using 100 as the measured value for the comparative Example 1, the higher index is better.

For wear resistance measurement actual vehicle tests were carried out under the following conditions:
- Load per tyre:: about 2700kg
- Internal pressure:: 7.26kg/cm²
- Average speed:: about 60km/h
- Generally good roads:

The degree of wear in the tread part after running for 80,000km was measured.

As shown in Table 1(A) and 1(B), the tyre for heavy duty vehicles according to the present invention shows improved high speed durability have a value about 5 to 15% higher than the conventional tyre having the same wear resistance.

As previously described, the tyre according to the present invention can improve high speed durability without deteriorating the tyre performance, because the middle layer of the folded edge ply composed of aromatic polyamide fibre cords is inserted between the first and the second belt plies to mitigate the shearing strain acting between them. On the other hand the growth of the outer diameter in the tread shoulder parts is restrained. In addition, by increasing the adhesion of the edges of the first belt ply to the rubber, belt separation is prevented.

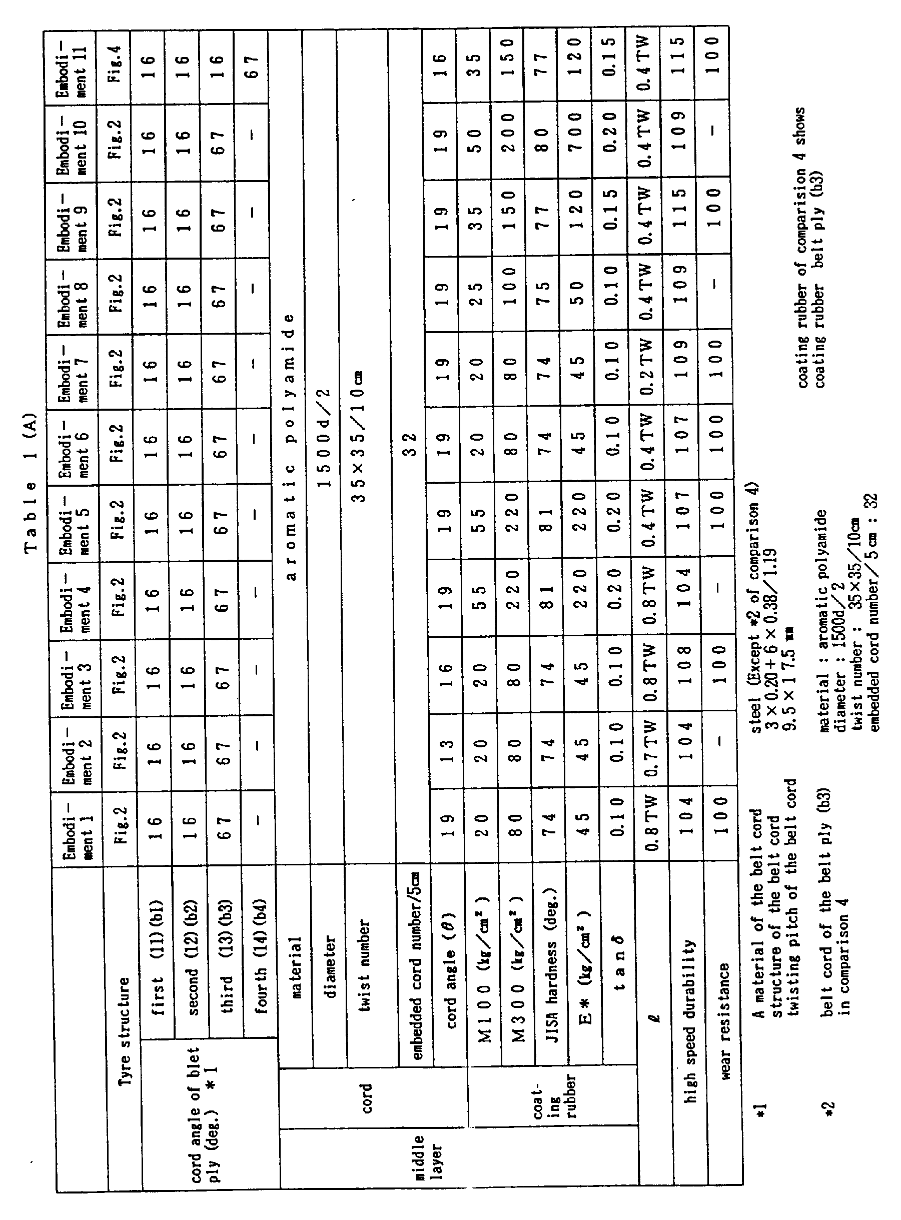

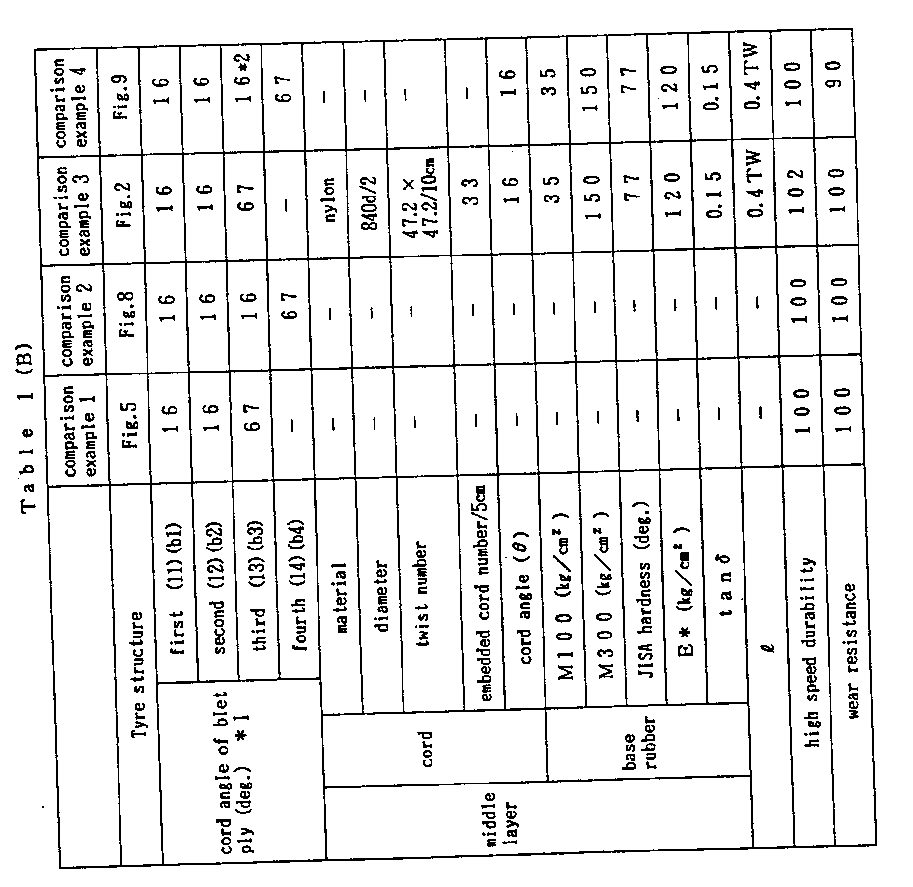

## Claims

1. A radial tyre for heavy duty vehicles comprising a carcass (7) with a semi-radial or radial structure extending from a tread (5) through side walls (4) and wrapped around a bead core (2) in each of two beads (3), a steel belt layer (9) with a triangulated structure composed of at least three belt plies (11,12,13) each containing steel belt cords and laid radially outside said carcass (7), characterised by a middle belt layer (15) containing cords of aromatic polyamide fibres, wherein the first belt ply (11) is positioned radially outermost among the said belt plies and has belt cords inclined at an angle from 10 degrees to 30 degrees to the tyre equator, the second belt ply (12) is positioned radially inside said first belt ply (11) and has belt cords inclined in the opposite direction to the belt cords of said first belt ply (11) at an angle from 10 degrees to 30 degrees to the tyre equator, said middle layer (15) has a main portion (16) provided between said first and second belt plies (11,12) and skirts or edges (17) folded over onto said first belt ply (11) from both axially outer edges of said main portion (16) so as to wrap each axially outer edge of said first belt ply (11), and said cords of said middle layer (15) in the main portion (16) slant in the same direction as the belt cords of said first belt ply (11) and are arranged at an angle of inclination of 3 degrees or less to the belt cords of said first belt ply (11).

2. A radial tyre according to claim 1 characterised in that said middle layer (15) is composed of aromatic polyamide fibre cords whose size is 1500d/2 and twist number is 35 x 35 T/10cm.

3. A radial tyre according to claim 1 or 2 characterised in that said middle layer (15) is so formed that the distance (L) in the axial direction between the innermost edges of said skirts (17) is 0.4 times the tread width (TW) or less.

4. A radial tyre according to claim 1, 2 or 3 characterised in that said cords of the middle layer (15) are embedded in rubber compound which has a 100% modulus of 25 to 50kg/cm², a 300% modulus of 100 to 200kg/cm², a JISA hardness of 75 to 80 degrees, a complex modulus of elasticity of 50 to 200kg/cm² and a loss factor of 0.1 to 0.2.

## Patentansprüche

1. Radialreifen für Schwerlastfahrzeuge, der umfaßt eine Karkasse (7) mit Halbradial- oder Radialaufbau, die sich von einem Laufstreifen (5) durch Seitenwände (4) erstreckt und jeweils um einen Wulstkern (2) in jedem von zwei Wulstbereichen (3) herumgeschlagen ist, eine Stahlgürtelschicht (9) mit Dreieckstruktur, die aus mindestens drei Gürtellagen (11, 12, 13) zusammengesetzt ist, die jeweils Stahlgürtelkorde enthalten und radial außerhalb der Karkasse (7) angeordnet sind, gekennzeichnet durch eine Mittel-Gürtelschicht (15), welche Korde aus Fasern von aromatischen Polyamiden enthält, wobei die erste Gürtellage (11) unter den Gürtellagen am weitesten radial außen angeordnet ist und Gürtelkorde besitzt, die mit einem Winkel von 10° bis 30° zum Reifenäquator geneigt sind, die zweite Gürtellage (12) radial innerhalb der ersten Gürtellage (11) angeordnet ist und Gürtelkorde besitzt, die in der entgegengesetzten Richtung zu den Gürtelkorden der ersten Gürtellage (11) mit einem Winkel von 10° bis 30° zum Reifenäquator gelegt sind, die Mittellage (15) einen Hauptabschnitt (16) besitzt, der zwischen der ersten und der zweiten Gürtellage (11, 12) angeordnet ist und Säume oder Kanten (17), die von beiden axial äußeren Kanten des Hauptabschnitts (16) über die erste Gürtellage (11) gefaltet sind, um so jede axial äußere Kante der ersten Gürtellage (11) einzuschlagen, und die Korde der Mittellage (15) in dem Hauptabschnitt (16) in der gleichen Richtung wie die Gürtelkorde der ersten Gürtellage (11) geneigt sind und mit einem Neigungswinkel von 3° oder weniger gegen die Gürtelkorde der ersten Gürtellage (11) gelegt sind.

2. Radialreifen nach Anspruch 1, dadurch gekennzeichnet, daß die Mittelschicht (15) zusammengesetzt ist aus Kordfasern aus aromatischem Polyamid, deren Größe 1500 d/2 und deren Verdrillzahl 35 x 35 T/10 cm ist.

3. Radial nach Anspruch 1 oder 2, dadurch gekennzeichnet, daß die Mittelschicht (15) so gebildet ist, daß der Abstand L in Axialrichtung zwischen den innersten Kanten der Säume (19) das 0,4-fache der Laufstreifenbreite (TW) oder weniger ist.

4. Radialreifen nach Anspruch 1, 2 oder 3, dadurch gekennzeichnet, daß die Korde der Mittelschicht (15) in einer Gummimasse eingebettet sind, die einen 100%-Modul von 25 bis 50 kp/cm², einen 300%-Modul von 100 bis 200 kp/cm², eine JISA-Härte von 75 bis 80°, einen komplexen Elastizitätsmodul von 50 bis 200 kp/cm² und einen Verlustfaktor von 0,1 bis 0,2 besitzt.

## Revendications

1. Pneumatique à carcasse radiale pour véhicule supportant de lourdes charges, comprenant une carcasse (7) ayant une structure radiale ou semi-radiale, disposée à partir d'une bande de roulement (5) dans des flancs (4) et s'enroulant autour d'une tringle (2) dans chacun de deux talons (3), une couche (9) de ceinture d'acier ayant une structure triangulée composée d'au moins trois nappes de ceinture (11, 12, 13) contenant chacune des câblés d'acier et disposée radialement à l'extérieur de la carcasse (7), caractérisé par une couche médiane (15) de ceinture ayant des câblés de fibres de polyamide aromatique, la première nappe (11) de ceinture est placée radialement la plus à l'extérieur parmi les nappes de ceinture et possède des câblés inclinés d'un angle compris entre 10 et 30° par rapport à l'équateur du pneumatique, la seconde nappe (12) est disposée radialement à l'intérieur par rapport à la première nappe (11) et a des câblés inclinés en sens opposé à celui des câblés de la première nappe (11) d'un angle compris entre 10 et 30° par rapport à l'équateur du pneumatique, la couche médiane (15) a une partie (16) disposée entre la première et la seconde nappe (11, 12) et des jupes ou bords (17) pliés sur la première nappe (11) à partir des deux bords axialement externes de la partie principale (16), afin que chaque bord axialement externe de la première nappe (11) soit entouré, et les câblés de la couche médiane (15) de la partie principale (16) sont inclinés dans le même sens que les câblés de la première nappe (11) de ceinture et forment un angle inférieur ou égal à 3° avec les câblés de la première nappe de ceinture (11).

2. Pneumatique à carcasse radiale selon la revendication 1, caractérisé en ce que la couche médiane (15) est composée de câblés de fibres de polyamide aromatique de dimension 1500d/2 et de nombre de torsions égal à 35x35 tr/10 cm.

3. Pneumatique à carcasse radiale selon la revendication 1 ou 2, caractérisé en ce que la couche médiane (15) est formée de manière que la distance (L) en direction axiale entre les bords les plus internes des jupes (17) soit inférieure ou égale à 0,4 fois la largeur (TW) de la bande de roulement.

4. Pneumatique à carcasse radiale selon la revendication 1, 2 ou 3, caractérisé en ce que les câblés de la couche médiane (15) sont enrobés dans une composition de caoutchouc ayant un module à 100 % compris entre 2,5.10⁶ et 5.10⁶ Pa (25 et 50 kg/cm²), un module à 300 % compris entre 1.10⁷ et 2.10⁷ Pa (100 à 200 kg/cm²), une dureté JISA comprise entre 75 et 80°, un module complexe d'élasticité compris entre 5.10⁶ et 20.10⁶ Pa (50 à 200 kg/cm²), et un facteur de pertes compris entre 0,1 et 0,2.
